(19) Europäisches Patentamt

European Patent Office

Office européen des brevets

(11) Publication number: **0 530 481 B1**

## EUROPEAN PATENT SPECIFICATION

(45) Date of publication of patent specification: **01.03.95**

(51) Int. Cl.6: **C09D 201/10**, C09D 5/00, G02B 6/44, H01B 7/28

(21) Application number: **92112454.1**

(22) Date of filing: **21.07.92**

The file contains technical information submitted after the application was filed and not included in this specification

(54) **Water-swellable resin coating composition and optical cable using the same.**

(30) Priority: **29.08.91 JP 245119/91**
**02.12.91 JP 348040/91**

(43) Date of publication of application:
**10.03.93 Bulletin 93/10**

(45) Publication of the grant of the patent:
**01.03.95 Bulletin 95/09**

(84) Designated Contracting States:
**AT BE CH DE DK ES FR GB GR IT LI LU NL PT SE**

(56) References cited:

**DATABASE WPIL Section Ch, Week 8907, 12 April 1989 Derwent Publications Ltd.,London, GB; Class A18, AN 89-050171**

**DATABASE WPIL Section Ch, Week 8939, 22 November 1989 Derwent Publications Ltd., London, GB; Class A81, AN 89-282619**

**DATABASE WPIL Section Ch, Week 9216, 17 June 1992 Derwent Publications Ltd., London, GB; Class A89, AN 92-129384**

(73) Proprietor: **SANYO CHEMICAL INDUSTRIES LTD.**
**11-1, Ichinohashinomoto-cho,**
**Higashiyama-ku,**
**Kyoto-shi**
**Kyoto 605 (JP)**

(72) Inventor: **Fujiura, Yoji**
**7-3, Takehana Nishinokuchi-cho,**
**Yamashina-ku**
**Kyoto-shi,**
**Kyoto-fu 607 (JP)**
Inventor: **Mita, Kouji**
**C 403, Akiba 36-1,Nawa-Machi,**
**Tokai-shi, Aichi-ken (JP)**
Inventor: **Koike, Masami**
**19-13 Hacchounawate-cho**
**Takatsuki-shi,**
**Osaka-fu 569 (JP)**
Inventor: **Kuriyama, Satoshi**
**17-72 Kawaharakakiuchi,**
**Shino-machi,**
**Kasehara**
**Kameoka-shi,**
**Kyoto-fu 612 (JP)**

(74) Representative: **Kador & Partner**
**Corneliusstrasse 15**
**D-80469 München (DE)**

## Description

This invention relates to water-swellable resin coating compositions, more particularly to water-swellable resin compositions applicable as coating films which can provide high water absorption (i.e., can absorb a large amount of water, and at high speed).

Further, the invention relates to water-excluding materials using such water-swellable resin coating compositions more particularly to water-excluding materials useful for preventing the entry of water into optical fiber cables or electric cables.

As water-swellable resin coating compositions to form a water-absorbing coating film there have previously been known resin compositions comprising a water-insoluble water-absorbing polymer and a urethane resin.

However coating films which are formed with these resin compositions can absorb only a small amount of water, and their water absorbing speed is slow.

Moreover, recently there has been an increasing trend toward laying optical fiber cables and electric cables underground, and a high water-excluding property and prevention of entry of water has been required. The entry of water means, in the case of elongate tubular materials such as cables, that when the covering material of the cable is broken, water enters the cables and the inside of the cable is soaked by entry or in flow of water. Methods of preventing such entry of water into the cable are : (1) A jelly-like material is charged into the cable; (2) Water-absorbing resin powder, for instance a partially crosslinked salt of polyacrylic acid, is provided in the interstices of the cable; (3) A water-excluding material obtained by retaining a water-absorbing resin on a backing material with a water-soluble solvent type adhesive (as disclosed in Japanese Patent Application Laid-Open No. 33116/1990) is adopted, and (4) A water-excluding material obtained by retaining a water-absorbing resin on a backing material with a rubber type binder (as disclosed in Japanese Patent Application Laid-Open No. 31390/1991).

However, in the method in which a jelly-like material is charged, or in the method in which a water-absorbing resin powder is charged, the charged material is liable to fall out when connecting cables, thus resulting in inferior operability. In the method in which a water-absorbing resin is retained on a backing material by using a water-soluble solvent type adhesive or a rubber type binder, a coating film of the water-soluble resin or rubber type binder is formed on the surface of the water-absorbing resin and thus interferes with the water absorption of the water-absorbing resin, thus resulting in insufficient water-excluding performance.

### SUMMARY OF THE INVENTION

It is an object of the present invention to provide a water-swellable resin coating composition which permits a coating film to be obtained with improved water absorption (i.e., having improved capacity for absorbing water and improved absorbing speed).

It is another object of the invention to provide a water-excluding material which is resistant to loss of charged material during cable connecting operations, and thus excellent in operability as well as providing high water absorption and excellent water-excluding performance.

It is a further object of the invention to provide an optical fiber cable which is resistant to loss of charged material during connection operations as well as providing excellent water entry prevention.

According to the invention, there is provided a water-swellable resin coating composition, which comprises a resin (A) having hydrolyzable silyl groups, a water-insoluble water-absorbing polymer (B) and, optionally, a film-forming resin (C), said resin composition being capable of film formation.

According to the invention there are also provided a water-excluding material which comprises a water-absorbing coating formed on a backing material, the coating comprising the resin (A) having hydrolyzable silyl groups, the water-absorbing polymer (B) and, optionally, the film-forming resin (C); and an optical fiber cable in which said water-excluding material is interposed between a cable cover and optical fibers.

### BRIEF DESCRIPTION OF THE DRAWINGS

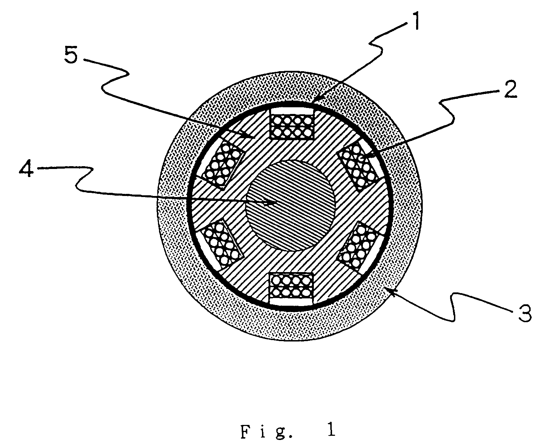

Figure 1 is a sectional view of a slot type water-proofed optical fiber cable embodying water-excluding material according to the invention.

## DETAILED DESCRIPTION OF THE INVENTION

According to the invention, as the resin (A) having hydrolyzable silyl groups there are used vinyl type resins (A-1) having silyl groups and urethane type resins (A-2) having silyl groups, as well as chemically bonded materials of such resins. These resins and materials may be used alone or in combinations of two or more of them.

Examples of suitable vinyl type resins (A-1) are copolymers of a vinyl type monomer [I] having an alkoxysilyl group with a different vinyl type monomer [II].

Examples of the vinyl type monomer [I] having an alkoxysilyl group are vinyl silane having an alkoxysilyl group, e.g., vinylmethyldimethoxysilane, vinyltrimethoxysilane, vinyltriethoxysilane, vinyltris($\beta$-methoxyethoxy)silane, etc.; and (meth)acryloxyalkylsilane having an alkoxysilyl group, e.g., $\gamma$-methacryloxypropyltrimethoxysilane, $\gamma$-methacryloxypropylmethyldimethoxysilane, $\gamma$-acryloxypropyltrimethoxysilane, $\gamma$-methacryloxypropylmethyldiethoxysilane, $\gamma$-acryloxypropyltriethoxysilane, etc. The alkoxyl group in the alkoxysilyl group preferably has a carbon number of 1 to 18.

Examples of the vinyl type monomer [II] are (1) (meth)acrylate alkylester (wherein the carbon number of the alkyl group is from 1 to 20), e.g., methyl(meth)acrylate, ethyl(meth)acrylate, n-butyl(meth)acrylate, 2-ethylhexyl(meth)acrylate, 2-hydroxyethyl(meth)acrylate, etc. ("(meth)acryl---" meaning "acryl---" and/or "methacryl---"), (2) aromatic vinyl type monomers, e.g., styrene, $\alpha$-methylstyrene, $\alpha$-chlorostyrene, etc., (3) halogenated vinyl type monomers, e.g., vinyl chloride, etc., (4) alkyl- or cycloalkyl vinylethers (wherein the carbon number of the alkyl is from 1 to 18 or carbon number of the cycloalkyl group is from 5 to 9), e.g., methylvinylether, cyclohexylvinylether, etc., (5) vinylesters, e.g., vinyl acetate, (6) nitrile-group-including vinyl type monomers, e.g., acrylonitrile, etc., (7) amide-group-including vinyl type monomers, e.g., (meth)acrylamide, crotoneamide, N-methylolacrylamide, diamide fumalate, etc., (8) epoxy-group-including vinyl type monomers, e.g., (meth)diglycidylacrylate, etc., (9) fluorine-substituted-alkyl-group-containing vinyl type monomers wherein the carbon number of the alkyl group is from 1 to 18, e.g., (meth)acrylate ester including perfluoroalkyl group such as perfluorooctylethyl group, e.g., maleate ester containing perfluoroalkyl group such as $C_8F_{17}(CH)_{11}OCOCH=CHCOOCH_3$, vinyl ether containing perfluoroalkyl group such as $C_7F_{15}CH_2OCH=CH_2$, etc., (10) vinyl type monomers including polydimethylsiloxane group, e.g.,

$$CH_2 = CHCOO(CH_2)_3 \, [Si(CH_3)_2O]_n \, Si(CH_3)_3,$$
$$CH_2 = C(CH_3)COOC_6H_4 \, [Si(CH_3)_2O]_n \, Si(CH_3)_3,$$
$$CH_2 = C(CH_3)COO(CH_2)_3 \, [Si(CH_3)_2O]_n \, Si(CH_3)_3,$$
$$CH_2 = C(CH_3)COO(CH_2)_3 \, [Si(C_6H_5)_2O]_n \, Si(CH_3)_3 \, ,$$

etc. (n in the above formulas denotes an integer of from 0 to 130), (11) unsaturated mono or polycarboxylic acids, e.g., (meth)acrylic acid, crotonic acid, sorbic acid, maleic acid, itaconic acid, cinnamic acid, etc., (12) aliphatic and aromatic vinylsulfonic acids, e.g., vinylsulfonic acid, allylsulfonic acid, vinyltoluenesolfonic acid, styrenesulfonic acid, etc., (13) (meth)acrylsulfonic acids, e.g., sulfoethyl(meth)acrylate, sulfopropyl(meth)acrylate, etc. and (14) vinyl type monomers including a polyoxyethylene group, e.g.,

$$CH_2 = C(R)COOCH_2CH_2O(CH_2CH_2O)_l H,$$
$$CH_2 = C(R)COOCH_2CH_2CH_2O(CH_2CH_2O)_l H,$$
$$CH_2 = C(R)COOCH_2CH_2O(CH_2CH_2O)_l R',$$
$$CH_2 = C(R)COOCH_2CH_2CH_2O(CH_2CH_2O)_l R',$$

(in the above formulas, R denotes H or $CH_3$, $l$ denotes an integer of from 1 to 200, and R' denotes an alkyl group with a carbon number of 1 to 10),

$$CH_2 = C(R)COO(EO/PO)_m H,$$
$$CH_2 = C(R)COO(EO/PO)_m R', \text{etc.}$$

(in the above two formulas, R denotes H or $CH_3$, m denotes an integer of from 1 to 200, EO denotes an oxyethylene group, PO denotes an oxypropyrene group, EO/PO > 2 (molar ratio), and R' denotes an alkyl group with a carbon number of 1 to 10).

Preferred among the vinyl type monomers [II] as exemplified above are vinyl type monomers including an anionic hydrophilic group or nonionic hydrophilic group in (11) to (14) noted above. Typical examples of the anionic hydrophilic group are carboxyl and sulfonate, and typical examples of the nonionic hydrophilic group are amide and hydroxyl. Particularly preferred are vinyl type monomers in (14) including a Polyoxyethylene group. These vinyl type monomers [II] may be used alone or combinations of two or more of them. The ratio of the vinyl type monomers [I] and [II] constituting the vinyl type resin (A-1) having the silyl group is that the monomer [I] is usually 0.01 to 60 % by weight, preferably 0.5 to 30 % by weight, while the monomer [II] is usually 40 to 99.99 % by weight, preferably 70 to 99.5 % by weight. If the amount of the monomer [I] is less than 0.01 % by weight, the coating property of the resin composition will be inferior, and also the water-absorbing speed of the coating film is reduced. If the amount exceeds 60 % by weight, the water-absorbing speed of the coating film becomes low and thus the coating resin composition is not practically acceptable.

The vinyl type resin (A-1) may suitably be obtained through radical polymerization of the monomers [I] and [II] in an organic solvent in the presence of a radical polymerization initiator. As the organic solvent may be used toluene, xylene, methylethylketone, methylisobutylketone, n-butyl acetate, cellosolve acetate and ethylene dichloride. These solvents may be used alone or in combinations of two or more of them.

The weight ratio of the organic solvent to the sum of the monomers [I] and [II] is usually 0.2 : 2 to 2 : 1, preferably 0.5 : 1 to 5 : 1.

As the radical polymerization initiator, azo type compounds, e.g., azobisisobutylonitrile, azobisisovaleronitrile or the like may be used.

The radical polymerization initiator is used in an amount usually of 0.001 to 20 %, preferably 0.1 to 10 %, with respect to the weight of the sum of the monomers [I] and [II].

In some cases, the radical polymerization initiator may be used together with a chain transfer agent to adjust the molecular weight. Examples of the chain transfer agent are n-lauryl mercaptan, n-duodecyl mercaptan, mercaptopropionic acid, t-duodecyl mercaptan, $\gamma$-mercaptopropyltrimethoxysilane and $\gamma$-mercaptopropylmethyldimethoxysilane.

The reaction temperature of the radical polymerization reaction is usually 50 to 150 °C, preferably 70 to 130 °C. The reaction time is usually 1 to 10 hours, preferably 2 to 7 hours. The termination of the polymerization may be confirmed by the disappearance of absorption (1,648 cm-1) of the double bond of the infrared absorption spectrum or, in case of using gas chromatography, from reduction of non-reacted monomer.

The resin that is produced through the polymerization reaction may be obtained dissolved or precipitated in an organic solvent. It may be separated, if necessary, by removal of the solvent through evaporation, filtering, washing, drying and so forth.

Examples of the urethane resin (A-2) having a hydrolyzable silyl group are those obtainable through reaction of a NCO end prepolymer, which is obtained, for instance, through reaction of a polyisocyanate and a polyol component, particularly a polyol component including hydrophilic polyol having polyoxyethylene chain, with $\gamma$-aminopropyl trimethoxysilane, and those obtainable through reaction of a hydroxyl-terminated prepolymer, which is obtained through reaction of similar materials as mefntioned above, with $\gamma$-isocyanatepropyl triethoxysilane. The materials used, conditions of production and so forth may be as described in Japanese Patent Application Laid-Open No. 29818/1983.

The molecular weight of the resin (A) as noted above is not critical, but is usually 1,000 to 100,000, preferably 3,000 to 60,000. The resin (A), when exposed to the atmosphere, is hardened by cross-linking at room temperature.

As the water-insoluble water-absorbing polymer (B) may be used ① those water-absorbing resins obtainable by polymerizing (a) starch or cellulose, (b) a water-soluble monomer having a hydrophilic group such as a carboxyl group and sulfonic acid group and/or a monomer capable of becoming water-soluble through hydrolysis and (c) a crosslinking agent and subsequently carrying out, if necessary, hydrolysis.

Details of the components (a), (b) and (c) used for producing the water-absorbent resins noted above and the proportions of the components (a), (b) and (c), method of production and specific examples of the water-absorbing resins, are described in Japanese Patent Application Laid-Open No. 25886/1977 and Japanese Patent Publication Nos. 46199/1978, 46200/1978 and 21041/1980.

Examples of water-absorbing resin other than those noted above, are ② those obtainable by polymerizing the components (a) and (b) (e.g., the hydrolyzed product of starch-acrylonitrile graft copolymer or hydrolyzed product of cellulose-acrylonitrile graft copolymer), ③ crosslinked material of (a) (e.g., crosslinked carboxymethylcellulose), ④ copolymer of the components (b) and (c) or if necessary partially hydrolyzed product thereof (e.g., partially hydrolyzed product of crosslinked polyacrylamide, crosslinked acrylic acid-acrylamide copolymer, crosslinked sulfonated polystyrene, saponified vinylester-unsaturated carboxylic acid copolymer disclosed in Japanese Patent Application Laid-Open No. 14689/1977 and 27455/1977, crosslinked polyacrylic acid or salts thereof, crosslinked acrylic acid-acrylic acid ester copolymer, crosslinked isobutylene-maleic acid anhydride copolymer and crosslinked carboxylic acid denaturated polyvinyl alcohol) and ⑤ polymerization product of the self-crosslinkable monomers in the component (b) (e.g., self-crosslinkable polyacrylic acid salts). These water-absorbing resins may be used alone or in combinations of two or more of them.

Among the above examples of these water-absorbing resins (B), ① and some of ④ such as partially hydrolyzed product of crosslinked polyacrylamide, crosslinked acrylic acid-acrylamide copolymer, crosslinked polyacrylic acid or salts thereof (e.g., alkali metal salts, ammonium salts, etc.), crosslinked acrylic acid-acrylic acid ester copolymer, crosslinked isobutylenemaleic acid anhydride copolymer and crosslinked carboxylic acid denaturated polyvinyl alcohol are preferable.

The water absorption capacity of the water-absorbing resins (B) with respect to pure (deionised) water is at least 50 ml/g, preferably 100, to 1,000, ml/g.

In the composition according to the invention, comprising a resin (A) having silyl groups, the water-insoluble water-absorbing polymer (B) and, if necessary, a film-forming resin (C), the weight ratio of (A) to (B) is 0.1 to 30 : 5 to 99.0, preferably 0.5 to 20 : 10 to 80. If the component (A) is less than 0.1, the film-forming property at the time of the coating is insufficient. If this content exceeds 30, the water absorption of the coating film is reduced.

The resin composition according to the invention may contain, if necessary, other film-forming resins (C), solvents and various additives such as surface active agents, viscosity increasing agents, penetrating agents, leveling agents, silyl group hydrolysis catalysts, and the like.

As film-forming resin (C) may be used various resins usually used as paints and coating materials, for instance, resins of lacquer type, acrylic lacquer type, thermosetting acrylic type, alkyd type, melamine type, epoxy type, urethane type, ester type, silicon type, fluorine type, etc. Preferred among these are urethane type resins and acrylic type resins. Where film-forming resins (C) are used, the weight ratio of the components (A), (B) and (C) is usually 0.1 to 30 : 5 to 99.0 : 0.01 to 30.

As the solvent may be used those hereinabove described in connection with the method of manufacture of (A-1), and other suitable solvents. The solvent is used usually in an amount of 0 to 600 % by weight with respect to the sum of the resin components of the composition.

The weight proportions of the components of a resin composition according to the invention, are preferably in the following ranges:

Resin (A): 0.1 to 30 parts

Resin (B): 5 to 99.9 parts

Resin (C): 0 to 30 parts

Surface active agent: 0 to 5 parts

Other additives: 0 to 40 parts

Solvent: 0 to 94.9 parts

Sum: 100 parts

The resin composition according to the invention is obtainable by, for instance, dispersing and mixing the individual components using a conventional stirrer or mixer such as a ball mill, kneader, sand grinder, roll mill, flat stonemill or the like.

Further, it is preferable, to effect crosslinking of the hydrolyzable silyl groups of the resin (A).

Particularly in application to water-excluding material, it is preferred to have the hydrolyzable silyl groups of the resin (A) mutually crosslinked, because by so doing the water-absorbing speed and secure stability of the paint and coating film are thus improved. Alternatively, the crosslinking may be effected after coating of the paint on the backing material. The crosslinking of hydrolyzable silyl groups may be effected by, for instance, heating the paint of coating film or adding a catalyst to the paint. Heating may suitably be at 40 to 120 °C, preferably 60 to 80 °C. As catalyst may be used acids such as hydrochloric acid, sulfuric acid, acetic acid and phosphoric acid, alkalis such as sodium hydroxide and potassium hydroxide, and dibutyl tin dialkylates such as dibutyl tin butylate and dibutyl tin diraulate.

By coating the resin composition according to the invention on a backing material, a water-absorbing film is obtainable. For example, the film is obtainable by dissolving and mixing a resin composition according to the invention in a suitable solvent, adjusting the solution to a suitable viscosity, then coating the solution at about 5 to 200 g/ cm$^2$ (in terms of the solid) on at least one surface of the backing material using coating means such as a blade coater, an air knife coater, a roll coater, a curtain coater, a bar coater, a gravure coater or the like, and drying the coating at room temperature, followed, if necessary, by heating. Heating temperature is suitably 40 to 180 °C, preferably 60 to 150 °C. The backing material may be of any kind, either inorganic or organic. Examples are films, cloth such as non-woven fabrics, paper, plastic boards, and substrates with various coating films formed thereon.

By coating the resin composition according to the invention on the surface of a backing material, a film can be formed which contains the silyl-group-containing resin (A) and the water-insoluble water-absorbing polymer (B). When this coating film is contacted by water, it exhibits high water absorption (i.e., high water-absorbing speed and capacity) and swells.

The water-excluding material according to the invention comprises the afore-mentioned water-swellable resin composition, which is formed on a backing material. The backing material of the water-excluding material may suitably be paper, non-woven fabrics, plastic sheets, threads, strings, yarns, etc. Preferred among these supports are non-woven fabrics obtainable from polyester type synthetic fibers, polypropyrene type synthetic fibers, acrylic type synthetic fibers, etc.

The paint may be coated on the backing material in the manner hereinabove described.

Examples of the solvent used as a component of the paint or for diluting the paint are heptane, hexane, cyclohexane, toluene, xylene, methylethyl ketone, methylisobutyl ketone, n-butyl acetate, cellosolve acetate, ethylene dichrolide, methanol, propanol, acetone, butanone, dimethyl formamide and methyl cellosolve. These solvents may be used alone or in combinations of two or more of them.

In the optical fiber cable according to the invention, the water-excluding material according to the invention is interposed between the cover of the cable and the optical fibers. An example of the cable structure will now be described with reference to the drawing.

Figure 1 is a sectional view showing a slot type optical fiber cable according to the invention. The cable comprises a core tension member 4, a slot type spacer 5 surrounding the member 4 and having peripheral slots, optical fibers 2 provided in the slots, a water-excluding material 1 according to the invention, the material 1 surrounding the slot type spacer 5, and a cover 3. The water shut-off material 1 is in the form of a tape and wound to cover the slot type spacer 5 with its water-swellable water-absorbing film coating side inside.

A large-size optical fiber cable may be provided, having a double-cover structure, which comprises a bundle of cables as shown in Figure 1, the tape-like water-excluding material according to the invention wound on the bundle of cables, and an exterior cable cover. In this case, it is possible to locate in the interstices of the bundle of cables, a water-excluding material according to the invention comprising a water-absorbing film formed on polypropyrene yarn as backing material.

In the case of the optical fiber cable having the structure shown in Figure 1, when water is introduced into it due to formation of a crack in the cable cover, the water-absorbing film coating of the water-excluding material according to the invention swells quickly by absorbing water, thus quickly filling the spaces in the slots to prevent entry of water.

EXAMPLES

The following production examples, comparative examples and examples of the invention are provided by way of illustration of the invention, without limitation. Percentages are by weight unless otherwise specified.

PRODUCTION EXAMPLE 1

100 g of isopropanol was charged into a 300-ml four-necked flask and heated to 83 °C while stirring. Then, a blend solution containing 80 g of an addition product obtained by adding 8 mols of ethylene oxide to 2-hydroxyethyl methacrylate, 1 g of γ-methacryloxypropyl trimethoxysilane, 19 g of 2-hydroxyethyl methylmethacrylate, 2 g of n-lauryl mercaptan, and 2 g of azobisisovaleronitrile (hereinafter referred to AIVN), was charged into the flask over a 3 hours period. The reaction was continued at the same temperature for 2 hours, and then 0.2 g of AIVN was added and was reacted for 2 hours. A 50 % isopropanol solution of a copolymer A was obtained.

PRODUCTION EXAMPLE 2

Polymerization was effected in the same manner as in the PRODUCTION EXAMPLE 1 except for using 73 g of methacrylic acid ester of an addition product obtained by adding 9 mols of methanol to methyleneoxide, 5 g of γ-methacryloxypropyl trimethoxysilane, 22 g of 2-hydroxyethyl acrylate, 1 g of n-lauryl mercaptan and 2 g of AIVN to obtain a 50 % methylethyl ketone (hereinafter referred to as MEK) solution of a copolymer B.

PRODUCTION EXAMPLE 3

Polymerization was effected in the same manner as in the PRODUCTION EXAMPLE 1 except for using 50 g of an addition product obtained by adding 12 mols of ethylene oxide to 2-hydroxyethyl methacrylate, 10 g of acrylic acid, 30 g of methyl methacrylate, 10 g of $\gamma$-methacryloxypropyl trimethoxysilane, 1 g of n-lauryl mercaptan and 2 g of AIVN to obtain a 50 % n-buthylacetate solution of a copolymer C.

PRODUCTION EXAMPLE 4

80 g of n-butyl acetate was charged into a 300-ml four-necked flask and heated to 110 °C. Then, a mixed solution containing 20 g of xylene, 53.7 g of methyl methacrylate, 31 g of n-butyl acrylate, 15 g of 2-hydroxyethyl methacrylate, 0.3 g of methacrylic acid and 1.7 g of azobisisopropylonitrile, was charged over a 3 hours period. The solution was reacted for 7 hours, thus obtaining an acrylic type film-forming polymer D with a molecular weight of 10,000.

EXAMPLES 1 TO 5 AND COMPARATIVE EXAMPLES 1 AND 2

As shown in Table 1, the various components were mixed while heating at 70 °C for 3 hours to obtain resin compositions. Each of these resin compositions was coated on paper using a bar coater and then dried at 50 °C for 3 hours to obtain a test sample having a coating film with a thickness of 300 $\mu$m. Table 2 shows the results of physical property tests on these samples.

EXAMPLES 6 AND 10 AND COMPARATIVE EXAMPLES 3 AND 4

As shown in Table 3, the various components were mixed while heating at 70 °C for 3 hours to obtain paints. Each of these paints was coated on a polyester type non-woven fabric (with a weight of 90 g/ m$^2$ ) and then dried at 105 °C for 3 minutes to obtain a test sample having a coating film with a thickness of 100 g/m$^2$ in the solid state. Table 4 shows the results of physical property tests on these samples.

EXAMPLE 11

The polyester type non-woven fabric with 100 g/m$^2$ in solid state of the paint according to the invention, obtained in Example 6, was cut to a tape having a width of 4 cm, and the tape was wound spirally and doubly on a slot type spacer with accommodated optical fibers. It was then covered with a flexible polyvinyl chloride resin cover, thus obtaining an optical fiber cable (Figure 1) according to the invention. The cover of this optical fiber cable was partly broken by forming a hole with a diameter of about 1 cm in it using a drill, and this cable was immersed in sea water to a depth of about 1 m. Sea water penetrated the cable up to 50 cm each side of the hole, exclusion of water becoming effective at this point.

T a b l e  1

|  | Example | | | | | Comparative Example | |
|---|---|---|---|---|---|---|---|
|  | 1 | 2 | 3 | 4 | 5 | 1 | 2 |
| Polymer A | 15.0 |  |  | 10.0 | 15.0 |  | 34.0 |
| Polymer B |  | 15.0 |  |  |  |  |  |
| Polymer C |  |  | 15.0 |  |  |  |  |
| Dibutyl tin di-laurate | 1.0 | 1.0 | 1.0 | 0.8 | 1.0 |  | 2.3 |
| "SANWET IM-5000MPS" | 56.0 | 56.0 | 56.0 | 58.5 | 56.0 | 66.7 |  |
| "SAMPRENE IB-1700D" | 18.0 | 18.0 | 18.0 | 21.0 |  | 21.4 | 40.9 |
| Polymer D |  |  |  |  | 18.0 |  |  |
| "SEDRANE FF-200" | 1.0 | 1.0 | 1.0 | 1.2 | 1.0 | 1.2 | 2.3 |
| MEK | 9.0 | 9.0 | 9.0 | 8.5 | 9.0 | 10.7 | 20.5 |
| Sum | 100 | 100 | 100 | 100 | 100 | 100 | 100 |

(Note)

"SANWET IM-5000MPS": A sodium acrylate type partially crosslinked water-absorbing resin powder manufactured by Sanyo Chemical Industries, Ltd. (water-

absorption performance: 400 ml/g)

"SAMPRENE IB-1700D": A urethane type resin for paint material manufactured by Sanyo Chemical Industries, Ltd. comprising a polyester type urethane resin, solid proportion: 30 %, solvent: MEK (methylethyl ketone).

"SEDRANE FF-200": A nonionic surfactant manufactured by Sanyo Chemical Industries, Ltd.

T a b l e   2

|  | Example | | | | | Comparative Example | |
|---|---|---|---|---|---|---|---|
|  | 1 | 2 | 3 | 4 | 5 | 1 | 2 |
| Water ab-sorbing speed | 18 | 20 | 19 | 16 | 19 | 360 ⟨ | No water was abso-rbed |
| Water ab-sorption | 5.3 | 5.1 | 5.4 | 5.3 | 5.2 | 3.5 | |
| Coating property | S | S | S | S | S | U | S |

(Note) Method of measurement:

1) Water-absorbing speed (sec./ml)

A cut test sample with a size of 10 cm × 10 cm was placed with the side coated with water-swelling water-absorbing resin composition upwards on a horizontal table. Then, 1 ml of artificial sea water, i.e., "Aquamarine" manufactured by Yashima Pure Chemical Co., Ltd., was dropped onto a substantially central portion of the sample using a pipette, and the time until the entire quantity of the sea water was absorbed was measured.

2) Water absorbency (g/g)

A cut test piece with a size of 10 cm × 10 cm was

put into a nylon net bag (of 250 meshes), which was then dipped in artificial sea water ("Aquamarine"). After one hour, the bag with the test piece was removed from the water and then held still for gravitational water removal for 15 minutes, and then the weight was measured to obtain the water absorbency. (The same operation was carried out with the bag alone, and the weight thus measure was subtracted as blank.)

3) Coating property

S: Satisfactory adhesion between paper and coating film and also smooth coating surface.

U: Unsatisfactory adhesion between paper and coating film and also greatly irregular coating surface.

Table 3

|  | Example | | | | | Comparative Example | |
|---|---|---|---|---|---|---|---|
|  | 6 | 7 | 8 | 9 | 10 | 3 | 4 |
| Polymer A | 29.0 |  |  | 14.5 | 14.5 |  | 38.8 |
| Polymer B |  | 29.0 |  |  |  |  |  |
| Polymer C |  |  | 29.0 |  |  |  |  |
| Dibutyl tin dilaurate | 1.0 | 1.0 | 1.0 | 0.5 | 0.5 |  | 1.2 |
| "SANWET IM-5000MPS" | 60.0 | 60.0 | 60.0 | 60.5 | 60.0 | 68.0 |  |
| "SAMPRENE IB-1700D" |  |  |  | 15.0 |  | 22.0 | 40.0 |
| Polymer D |  |  |  |  | 15.0 |  |  |
| MEK | 10.0 | 10.0 | 10.0 | 10.0 | 10.0 | 10.0 | 20.0 |
| Sum | 100 | 100 | 100 | 100 | 100 | 100 | 100 |

Table 4

| | | | Example | | | Comparative Example | |
|---|---|---|---|---|---|---|---|
| | 6 | 7 | 8 | 9 | 10 | 3 | 4 |
| Water-absorbing speed | 14 | 16 | 17 | 19 | 19 | 360 < | No water was absorbed |
| Water-absorbency | 5.5 | 5.4 | 5.5 | 5.3 | 5.2 | 3.5 | |
| Coating property | S | S | S | S | S | U | S |

(Note) Method of measurement:
The methods of measurements of the water-absorbing speed and water absorbency are the same as noted above in the (Note) concerning Table 2.
The coating property evaluation standards are as follows:
S: Satisfactory adhesion between non-woven fabric and coating film and smooth coating surface.
U: Unsatisfactory adhesion between non-woven fabric and coating film and greatly irregular coating surface.

EFFECT OF THE INVENTION

(1) The coating film obtainable from the water-swellable resin composition according to the invention provides very high water-absorbing speed and capacity.

(2) The water-swellable resin composition according to the invention provides for satisfactory coating property when coated on a backing material.

The water-swellable resin composition according to the invention is thus useful as water-absorbing paint.

(3) The water-excluding material according to the invention can absorb water at a very high speed and absorb a large amount of water when in contact with water.

(4) With the water-excluding material according to the invention, the adhesion between the backing material and coating film is good. Thus, in its applications to optical fiber cables and electric cables, there is no possibility of detachment of the coating film during operation, and excellent operability can be ensured.

(5) Optical fiber cables and electric cables using the water-excluding material according to the invention prevent the entry and penetration of water very effectively.

The water-excluding material according to the invention is thus useful as water-excluding material for optical fiber cables and electric cables.

**Claims**

1.   A water-swellable resin coating composition having a film-forming property comprising a vinyl or urethane type resin (A) having hydrolysable silyl groups and a water-insoluble water-absorbing polymer (B) having water absorption capacity of 50 ml/g to 1000 ml/g with respect to deionised water, characterised in that said resin (A) also has anionic hydrophilic groups and/or nonionic hydrophilic groups and the weight ratio of said resin (A) to said polymer (B) is 0.1 to 30 : 5 to 99.0.

2.   A water-swellable resin coating composition according to claim 1, which further comprises a film-forming resin (C).

3.   A water-swellable resin coating composition according to claim 1 or claim 2 wherein said hydrophilic groups comprise polyoxyethylene groups.

4.   A water-swellable resin coating composition according to any one of claims 1 to 3, wherein said resin (A) is a vinyl type resin.

5.   A water-swellable resin coating composition according to claim 2, wherein the weight ratio of said resin (A), polymer (B) and film-forming resin (C) is 0.5 to 20 : 10 to 80 : 0.1 to 20.

6. A water-excluding material comprising a backing material and a water-absorbing coating formed thereon, said coating comprising a vinyl or urethane type resin (A) having hydrolysable silyl groups and a water-insoluble water-absorbing polymer (B) having water absorption capacity of 50 ml/g to 1000 ml/g with respect to deionised water, the weight ratio of said resin (A) to said polymer (B) being 0.1 to 30 : 5 to 99.0.

7. A water-excluding material according to claim 6, wherein said water-absorbing coating further comprises a film-forming resin (C).

8. A water-excluding material according to claim 6 or claim 7, wherein said resin (A) also has anionic hydrophilic groups and/or nonionic hydrophilic groups.

9. A water-excluding material according to claim 8, wherein said hydrophilic groups comprise polyoxyethylene groups.

10. A water-excluding material according to claim 6 to claim 7, wherein said resin (A) is a vinyl type resin.

11. A water-excluding material according to claim 7, wherein the weight ratio of said resin (A), polymer (B) and film-forming resin (C) is 0.5 to 20 : 10 to 80 : 0.1 to 20.

12. A water-excluding material according to claim 6 or claim 7, wherein said hydrolysable silyl groups of said resin (A) are mutually crosslinked.

13. An optical fiber cable in which a water-excluding material according to claim 6 or claim 7 is interposed between a cable cover and optical fibers.

## Patentansprüche

1. Wasserquellbare Harzbeschichtungszusammensetzung mit Filmbildungsvermögen, die ein vinyl- oder urethanartiges Harz (A) mit hydrolysierbaren Silylgruppen und ein wasserunlösliches, wasserabsorbierendes Polymer (B) mit einer Wasserabsorptionskapazität von 50 ml/g bis 1 000 ml/g in Bezug auf deionisiertes Wasser umfaßt, dadurch **gekennzeichnet,** daß das Harz (A) auch anionische hydrophile Gruppen und/oder nichtionische hydrophile Gruppen aufweist und das Gewichtsverhältnis des Harzes (A) zum Polymer (B) 0,1 bis 30 : 5 bis 99,0 beträgt.

2. Wasserquellbare Harzzusammensetzung nach Anspruch 1, die darüber hinaus ein filmbildendes Harz (C) umfaßt.

3. Wasserquellbare Harzbeschichtungszusammensetzung nach Anspruch 1 oder 2, worin die hydrophilen Gruppen Polyoxyethylengruppen umfassen.

4. Wasserquellbare Harzbeschichtungszusammensetzung nach einem der Ansprüche 1 bis 3, worin das Harz (A) ein vinylartiges Harz ist.

5. Wasserquellbare Harzbeschichtungszusammensetzung nach Anspruch 2, worin das Gewichtsverhältnis des Harzes (A), des Polymers (B) und des filmbildenden Harzes (C) 0,5 bis 20 : 10 bis 80 : 0,1 bis 20 beträgt.

6. Wasserausschließendes Material, das ein Trägermaterial und eine darauf ausgebildete wasserabsorbierende Beschichtung umfaßt, wobei die Beschichtung ein vinyl- oder urethanartiges Harz (A) mit hydrolysierbaren Silylgruppen und ein wasserunlösliches, wasserabsorbierendes Polymer (B) mit einer Wasserabsorptionskapazität von 50 ml/g bis 1 000 ml/g, bezogen auf deionisiertes Wasser, umfaßt und wobei das Gewichtsverhältnis des Harzes (A) zum Polymer (B) 0,1 bis 30 : 5 bis 99,0 beträgt.

7. Wasserausschließendes Material nach Anspruch 6, worin die wasserabsorbierende Beschichtung darüberhinaus ein filmbildendes Harz (C) umfaßt.

8. Wasserausschließendes Material nach Anspruch 6 oder 7, worin das Harz (A) außerdem anionische hydrophile Gruppen und/oder nichtionische hydrophile Gruppen aufweist.

9. Wasserausschließendes Material nach Anspruch 8, worin die hydrophilen Gruppen Polyoxvethylengruppen umfassen.

10. Wasserausschließendes Material nach Anspruch 6 bis 7, worin das Harz (A) ein vinylartiges Harz ist.

11. Wasserausschließendes Material nach Anspruch 7, worin das Gewichtsverhältnis des Harzes (A), des Polymers (B) und des filmbildenden Harzes (C) 0,5 bis 20 : 10 bis 80 : 0,1 bis 20 beträgt.

12. Wasserausschließendes Material nach Anspruch 6 oder 7, worin die hydrolysierbaren Silylgruppen des Harzes (A) gegenseitig vernetzt sind.

13. Optisches Faserkabel, in welchem ein wasserausschließendes Material nach Anspruch 6 oder 7 zwischen einer Kabelverkleidung und den optischen Fasern eingeschoben ist.

## Revendications

1. Composition de revêtement en résines gonflables à l'eau possédant une propriété filmogène, comprenant une résine de type vinylique ou uréthane (A) comportant des groupes de silyle hydrolysables et un polymère absorbant l'eau et insoluble dans l'eau (B) ayant une capacité d'absorption de l'eau de 50 ml/g à 1 000 ml/g pour de l'eau déminéralisée, caractérisée en ce que ladite résine (A) possède aussi des groupes hydrophiles anioniques et/ou des groupes hydrophiles non ioniques et le rapport pondéral de ladite résine (A) audit polymère (B) est de 0,1 à 30:5 à 99,0.

2. Composition de revêtement en résines gonflables à l'eau selon la revendication 1, qui comprend aussi une résine filmogène (C).

3. Composition de revêtement en résines gonflables à l'eau selon la revendication 1 ou la revendication 2, dans laquelle lesdits groupes hydrophiles comprennent des groupes polyoxyéthylène.

4. Composition de revêtement en résines gonflables à l'eau selon l'une quelconque des revendications 1 à 3, dans laquelle ladite résine (A) est une résine de type vinylique.

5. Composition de revêtement en résines gonflables à l'eau selon la revendication 2, dans laquelle le rapport pondéral de ladite résine (A), du polymère (B) et de la résine filmogène (C) est de 0,5 à 20:10 à 80:0,1 à 20.

6. Matériau expulsant l'eau comprenant un matériau de support et, formé par dessus, un revêtement absorbant l'eau, ledit revêtement comprenant une résine de type vinylique ou uréthane (A) comportant des groupes silyle hydrolysables et un polymère absorbant l'eau et insoluble dans l'eau (B) ayant une capacité d'absorption de l'eau de 50 ml/g à 1 000 ml/g pour de l'eau déminéralisée, le rapport pondéral de ladite résine (A) audit polymère (B) étant de 0,1 à 30:5 à 99,0.

7. Matériau expulsant l'eau selon la revendication 6, dans lequel ledit revêtement absorbant l'eau comprend aussi une résine filmogène (C).

8. Matériau expulsant l'eau selon la revendication 6 ou la revendication 7, dans lequel ladite résine (A) possède aussi des groupes hydrophiles anioniques et/ou des groupes hydrophiles non ioniques.

9. Matériau expulsant l'eau selon la revendication 8, dans lequel lesdits groupes hydrophiles comprennent des groupes polyoxyéthylène.

10. Matériau expulsant l'eau selon la revendication 6 ou la revendication 7, dans lequel ladite résine (A) est une résine de type vinylique.

**11.** Matériau expulsant l'eau selon la revendication 7, dans laquelle le rapport pondéral de ladite résine (A), du polymère (B) et de la résine filmogène (C) est de 0,5 à 20:10 à 80:0,1 à 20.

**12.** Matériau expulsant l'eau selon la revendication 6 ou la revendication 7, dans lequel lesdits groupes silyle hydrolysables de ladite résine (A) sont mutuellement réticulés.

**13.** Câble à fibres optiques dans lequel un matériau expulsant l'eau selon la revendication 6 ou la revendication 7 est intercalé entre une gaine de câble et des libres optiques.

F i g.    1